# FASCICULE DE BREVET EUROPEEN

(11) **EP 3 414 494 B1**
(45) Date de publication et mention de la délivrance du brevet: **05.08.2020**
(21) Numéro de dépôt: 17703986.4
(22) Date de dépôt: 08.02.2017
(51) Int. Cl.: F28D 7/00, F28D 7/04, F28D 9/00, F24H 8/00, F24H 1/43, F28D 7/02, F28F 3/12, F24H 9/00

(54) **DÉFLECTEUR POUR ÉCHANGEUR DE CHALEUR À CONDENSATION ET ÉCHANGEUR MUNI D'UN TEL DÉFLECTEUR**
DEFLEKTOR FÜR KONDENSATIONSWÄRMETAUSCHER UND MIT SOLCH EINEM DEFLEKTOR AUSGESTATTETER AUSTAUSCHER
DEFLECTOR FOR CONDENSATION HEAT EXCHANGER AND EXCHANGER PROVIDED WITH SUCH A DEFLECTOR

(30) Priorité: 09.02.2016 FR 1651014
(43) Date de publication de la demande: 19.12.2018
(73) Titulaire: SERMETA, 29600 Morlaix (FR)
(72) Inventeur: LE MER, Joseph, 29252 Plouezoch (FR)
(74) Mandataire: Regimbeau
(86) Numéro de dépôt international: PCT/EP2017/052753
(87) Numéro de publication internationale: WO 2017/137437

(56) Documents cités:
- EP-A2- 1 600 720
- FR-A1- 2 323 119
- FR-A1- 2 942 866
- US-A1- 2011 303 400

## Description

### DOMAINE TECHNIQUE GENERAL

L'invention se situe dans le domaine des échangeurs de chaleur à condensation à tubes d'eau.

La présente invention concerne plus précisément un déflecteur pour ce type d'échangeur et un échangeur muni de ce déflecteur.

### ETAT DE L'ART

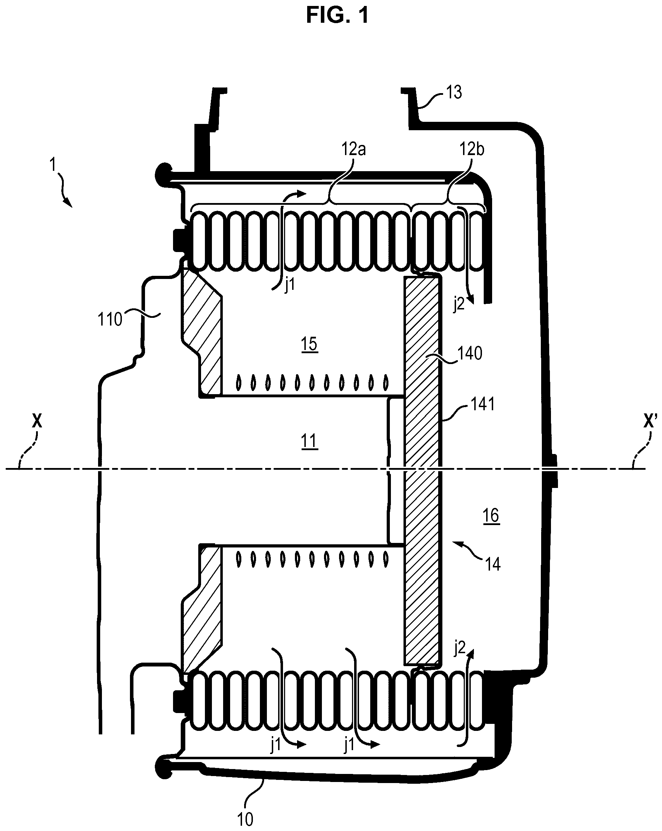

Un exemple de réalisation d'un échangeur de chaleur à condensation selon l'état de la technique est illustré sur la figure 1 jointe, qui en représente une vue en coupe longitudinale.

Cet échangeur 1 comprend une enveloppe 10 étanche aux gaz, qui délimite une enceinte, à l'intérieur de laquelle sont montés deux faisceaux de tubes échangeurs de chaleur 12a, 12b et des moyens 11 de production de gaz chauds ou d'amenée de gaz chauds, tels qu'un brûleur (en particulier à gaz ou à fioul) fixé sur un couvercle 110 qui vient obturer la façade avant de l'échangeur.

L'enveloppe 10 présente approximativement une forme générale cylindrique d'axe longitudinal X-X'.

Les deux faisceaux 12a, 12b sont des faisceaux de tubes hélicoïdaux coaxiaux d'axe X-X', placés bout à bout, le premier 12a faisant office d'échangeur primaire et le second 12b, d'échangeur secondaire. Ces tubes sont réalisés dans un matériau bon conducteur thermique, tel du métal. Des moyens non représentés sur les figures sont prévus pour faire circuler un fluide caloporteur à réchauffer, tel que de l'eau, à l'intérieur desdits tubes.

L'enveloppe 10 de l'échangeur comprend en outre une manchette 13 d'évacuation des gaz brûlés.

Un déflecteur 14 est interposé entre les deux faisceaux de tubes 12a, 12b.

Ce déflecteur 14 comprend un disque 140 en matériau isolant et réfractaire à la chaleur, par exemple à base de fibres de silice, supporté par une armature discoïde 141 en forme de plaque mince de plus grand diamètre. Le bord périphérique annulaire de l'armature 141 est inséré et fixé de manière étanche aux gaz, entre les deux extrémités des faisceaux 12a et 12b.

Le déflecteur 14 partage ainsi l'enceinte délimitée par l'enveloppe 10, en une chambre 15, dite "de combustion", contenant le brûleur 11 et une chambre 16, dite "de condensation", qui s'étend de ce déflecteur 14 jusqu'à la manchette 13.

Le déflecteur 14 joue deux rôles, à savoir modifier la trajectoire des gaz chauds produits par le brûleur 11 et isoler thermiquement la chambre de condensation 16.

Ainsi, les gaz chauds produits par le brûleur 11 sont forcés de passer par les interstices situés entre les spires des tubes du faisceau primaire 12a, de l'intérieur vers l'extérieur (flèches j1), puis entre les spires des tubes du faisceau secondaire 12b, cette fois de l'extérieur vers l'intérieur (flèches j2).

Par ailleurs, la température du déflecteur 14 du côté de la chambre de combustion 15 est de l'ordre de 900°C à 1000°C, tandis que du côté chambre de condensation 16, elle est seulement de l'ordre de 100°C à 150°C.

Toutefois, cette température devrait être plus basse pour améliorer le rendement global de l'échangeur 1.

En outre, le matériau réfractaire du disque 140 a tendance à rayonner dans la chambre de combustion 15, durant les phases de fonctionnement du brûleur 11, ce qui participe à la création de polluants, tels que des oxydes d'azote (NOx) et du monoxyde de carbone (CO), ces polluants étant ensuite évacués dans les fumées qui sortent de l'échangeur.

Enfin, la durée de vie du disque 140 est plus faible que celle des faisceaux de tubes 12a, 12b, ce qui implique son remplacement au bout de quelques années, lors de l'entretien de l'échangeur, ce qui augmente les coûts de fonctionnement de celui-ci.

On connaît également d'après le document EP 1 600 720 un élément d'un échangeur de chaleur comprenant deux coupelles assemblées par paire, de part et d'autre d'une cloison en spirale. Chaque coupelle présente à cet effet, une gorge ou siège en spirale destiné à recevoir le côté de la cloison en spirale. En conséquence, il n'y a qu'un seul canal de circulation ménagé entre la coupelle avant et la coupelle arrière et non au moins deux de part et d'autre d'une cloison centrale comme tel est le cas dans l'invention.

De plus, cet élément d'échangeur de chaleur n'est pas un déflecteur destiné à partager l'enceinte d'un échangeur en une chambre de combustion et une chambre de condensation.

### PRESENTATION DE L'INVENTION

L'invention a pour but de résoudre les inconvénients précités de l'état de la technique et notamment :
- d'améliorer le rendement de l'échangeur de chaleur pour une puissance donnée,
- de réduire les émissions de polluants, tels que les oxydes d'azote (NOx),
- de supprimer le disque en céramique du déflecteur, pour éviter d'avoir à le remplacer,
- de réduire les coûts de fonctionnement.

A cet effet, l'invention concerne un déflecteur pour échangeur de chaleur à condensation.

Conformément à l'invention, ce déflecteur comprend deux coupelles dites "avant" et "arrière", une cloison centrale, un raccord d'entrée et un raccord de sortie, chaque coupelle comprenant un fond entouré d'un rebord périphérique, la face intérieure du fond de chaque coupelle étant configurée en relief de façon à présenter au moins une gorge, dite "de circulation", qui s'étend sur au moins une partie dudit fond, les deux coupelles étant assemblées l'une avec l'autre de manière étanche aux fluides, de part et d'autre de ladite cloison centrale, de façon que leurs parties concaves respectives soient orientées l'une vers l'autre et que chaque gorge de circulation forme avec ladite cloison centrale au moins un canal, dit "de circulation", dans lequel un fluide caloporteur, tel que de l'eau, est destiné à circuler, les deux coupelles et la cloison centrale étant réalisés dans un matériau bon conducteur thermique, la première des deux extrémités de chaque canal de circulation de la coupelle avant, respectivement de la coupelle arrière, étant en communication de fluide avec le raccord de sortie, respectivement le raccord d'entrée, dudit déflecteur et la seconde extrémité de chaque canal de circulation de la coupelle avant étant raccordée à la seconde extrémité d'un canal de la coupelle arrière, via un orifice percé dans ladite cloison centrale, de sorte que ledit fluide caloporteur peut circuler du raccord d'entrée au raccord de sortie, au travers de l'ensemble des canaux de circulation en s'écoulant de part et d'autre de ladite cloison centrale

Grâce à ces caractéristiques de l'invention, le fluide caloporteur qui circule entre la paroi arrière et la cloison centrale refroidit ladite paroi arrière, ce qui contribue grandement à abaisser la température des fumées qui lèchent cette paroi arrière avant de sortir de l'échangeur. Ceci permet d'augmenter le rendement global de l'échangeur.

Par ailleurs, la suppression du disque en matériau réfractaire permet d'une part de supprimer son effet radiant et donc d'abaisser sensiblement les émissions de particules polluantes, et d'autre part, d'augmenter la durée de vie de l'échangeur, puisqu'il n'est plus nécessaire de le remplacer.

Selon d'autres caractéristiques avantageuses et non limitatives de l'invention, prises seules ou en combinaison :
- le canal ou les canaux de circulation de la coupelle avant et le canal ou les canaux de circulation de la coupelle arrière sont symétriques par rapport à un plan de symétrie passant par ladite cloison centrale, de sorte que le fluide caloporteur circule dans le canal ou les canaux de circulation de la coupelle avant à contre-courant du sens dans lequel il circule dans un canal ou les canaux de la coupelle arrière situés en regard ;
- le fond de la coupelle avant et le fond de la coupelle arrière sont configurés en relief de façon à former une gorge périphérique annulaire, dite respectivement "gorge de collecte" et "gorge de distribution, qui s'étend autour desdites gorges de circulation, les deux coupelles étant assemblées de part et d'autre de la cloison centrale, de façon les gorges de collecte et de distribution forment avec ladite cloison centrale respectivement un canal de collecte et un canal de distribution, le raccord d'entrée débouchant dans ledit canal de distribution et le raccord de sortie débouchant dans ledit canal de collecte, lesdits canaux de distribution et de collecte étant en outre muni chacun intérieurement d'une cloison déflectrice qui permet de guider le fluide caloporteur du canal de distribution vers les canaux de circulation de la coupelle arrière et respectivement des canaux de circulation de la coupelle avant vers le canal de collecte ;
- le canal ou les canaux de circulation sont en forme de spirale ;
- le canal ou les canaux de circulation sont en forme de serpentin ;
- le canal ou les canaux de circulation sont en forme rectiligne ;
- les coupelles avant et arrière comprennent au moins deux canaux de circulation disposés enroulés côte à côte en spirale et à l'intérieur desquels le fluide caloporteur circule en parallèle, les premières extrémités desdits canaux de circulation de la coupelle avant débouchent dans le canal de collecte et les premières extrémités desdits canaux de circulation de la coupelle arrière débouchent dans le canal de distribution ;

L'invention concerne également un échangeur de chaleur à condensation comprenant au moins un faisceau consistant en un tube ou un groupe de tubes disposés bout à bout, enroulés en hélice, ce tube étant réalisé en matériau thermiquement bon conducteur, ce ou ces faisceaux étant monté(s) fixement à l'intérieur d'une enveloppe étanche aux gaz, cette enveloppe étant munie d'une manchette d'évacuation des gaz, des moyens étant prévus pour faire circuler au moins un fluide caloporteur à réchauffer, tel que de l'eau, à l'intérieur du ou desdits faisceaux de tube(s), l'échangeur comprenant également un déflecteur disposé à l'extrémité dudit faisceau d'au moins un tube ou intercalé entre deux de ces faisceaux adjacents, et des moyens d'amenée ou des moyens de production de gaz chauds.

Conformément à l'invention, ledit déflecteur est tel que précité et le déflecteur et lesdits moyens d'amenée ou moyens de production de gaz chauds sont disposés de façon à ce que lesdits gaz chauds lèchent la face extérieure de la coupelle avant du déflecteur puis traversent radialement ou approximativement radialement le faisceau de tube ou de groupe de tubes situé en amont dudit déflecteur en passant à travers les interstices séparant ses spires, de l'intérieur vers l'extérieur et enfin lèchent la face extérieure de la coupelle arrière dudit déflecteur, avant d'être évacués par ladite manchette d'évacuation des gaz.

Selon d'autres caractéristiques avantageuses et non limitatives de l'invention, prises seules ou en combinaison :
- le raccord de sortie dudit déflecteur est en communication de fluide avec au moins l'un des faisceaux de tubes, de sorte que c'est le même fluide caloporteur qui circule dans le déflecteur et dans le ou les faisceaux de tube(s) ;
- le diamètre externe du déflecteur est identique ou sensiblement identique au diamètre externe du ou des faisceaux de tubes et la longueur entre les deux extrémités du raccord d'entrée et du raccord de sortie du déflecteur est identique ou sensiblement identique à la longueur entre les deux extrémités des embouchures du tube de chaque faisceau de tube ;
- le déflecteur est intercalé entre deux faisceaux de tube ou de groupe de tubes, le faisceau situé en amont du déflecteur faisant office d'échangeur primaire et le faisceau situé en aval du déflecteur par rapport au sens d'écoulement des gaz chauds faisant office d'échangeur secondaire, de sorte que les gaz chauds lèchent la face extérieure de la coupelle avant du déflecteur puis traversent radialement ou approximativement radialement le faisceau de tube ou de groupe de tubes de l'échangeur primaire en passant à travers les interstices séparant ses spires, de l'intérieur vers l'extérieur, puis ensuite traversant radialement ou approximativement radialement le faisceau de tube ou de groupe de tubes de l'échangeur secondaire en passant à travers les interstices séparant ses spires, de l'extérieur vers l'intérieur, et enfin lèchent la face extérieure de la coupelle arrière dudit déflecteur avant d'être évacués par ladite manchette d'évacuation des gaz ;
- la paroi du ou des tube(s) d'un faisceau de tube présente une section droite aplatie et ovale dont le grand axe est perpendiculaire, ou approximativement perpendiculaire, à celui de l'hélice, tandis que la largeur de l'interstice séparant deux spires adjacentes est constante et plus faible que l'épaisseur de ladite section droite.

### PRESENTATION DES FIGURES

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins, outre la figure 1 précitée :
- la figure 2 est une vue en perspective du déflecteur conforme à l'invention,
- la figure 3 est une vue éclatée, en perspective des différents éléments constituant le déflecteur de la figure 2,
- la figure 4 est une vue en coupe partielle du déflecteur selon l'invention prise selon le plan de coupe passant par la ligne IV-IV en figure 2,
- la figure 4a est une vue de détail de la figure 4,
- les figures 5a et 5b sont des vues de face de l'intérieur des deux coupelles qui forment le déflecteur conforme à l'invention,
- la figure 6 est une vue éclatée, en perspective des différents éléments constitutifs d'un échangeur de chaleur conforme à un premier mode de réalisation de l'invention, ce dernier étant muni d'un déflecteur également conforme à l'invention,
- les figures 7 et 8 sont des vues en coupe longitudinale verticale de l'échangeur de la figure 6, prises respectivement selon les plans passant par les lignes VII-VII et VIII-VIII de la figure 6,
- la figure 9 est une vue en coupe longitudinale d'un échangeur de chaleur selon un second mode de réalisation de l'invention, et
- les figures 10, 11 et 12 sont des vues de face schématiques de trois autres modes de réalisation de déflecteurs conformes à l'invention.

### DESCRIPTION DETAILLEE DE L'INVENTION

Un premier mode de réalisation du déflecteur 2 conforme à l'invention va maintenant être décrit plus en détails.

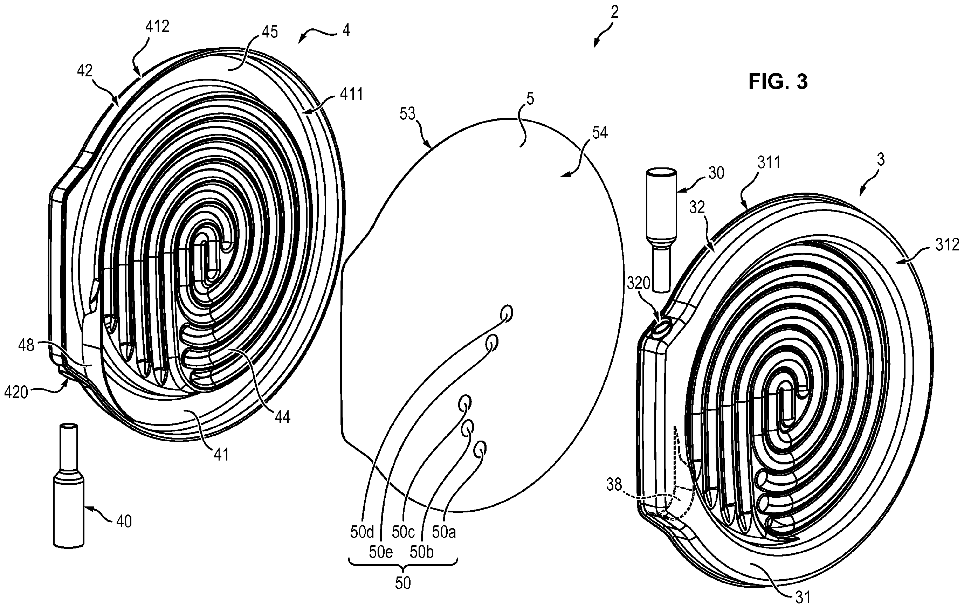

En se reportant sur la figure 3, on peut voir que le déflecteur 2 comprend deux coupelles, dites "avant" 3 et "arrière" 4, une cloison centrale 5 et deux raccords, à savoir un raccord d'entrée 40 et un raccord de sortie 30.

La coupelle avant est dénommée ainsi car elle est destinée à être orientée vers le brûleur, lorsque le déflecteur 2 est placé dans un échangeur de chaleur.

Les différents éléments constitutifs du déflecteur 2 sont réalisés dans un matériau bon conducteur thermique, par exemple en métal, de préférence en acier inoxydable. Ils pourraient également être réalisés en aluminium, par exemple.

La coupelle arrière 4 comprend un fond 41 entouré d'un rebord périphérique 42 qui lui est perpendiculaire ou sensiblement perpendiculaire.

Le fond 41 présente une forme circulaire ou sensiblement circulaire. Le rebord périphérique 42 épouse le contour du fond 41.

Le raccord d'entrée 40 est un tube. Il est avantageusement emmanché et soudé au travers d'une ouverture 420 ménagée dans le rebord 42.

Le fond 41 présente une face intérieure 411 et une face extérieure 412.

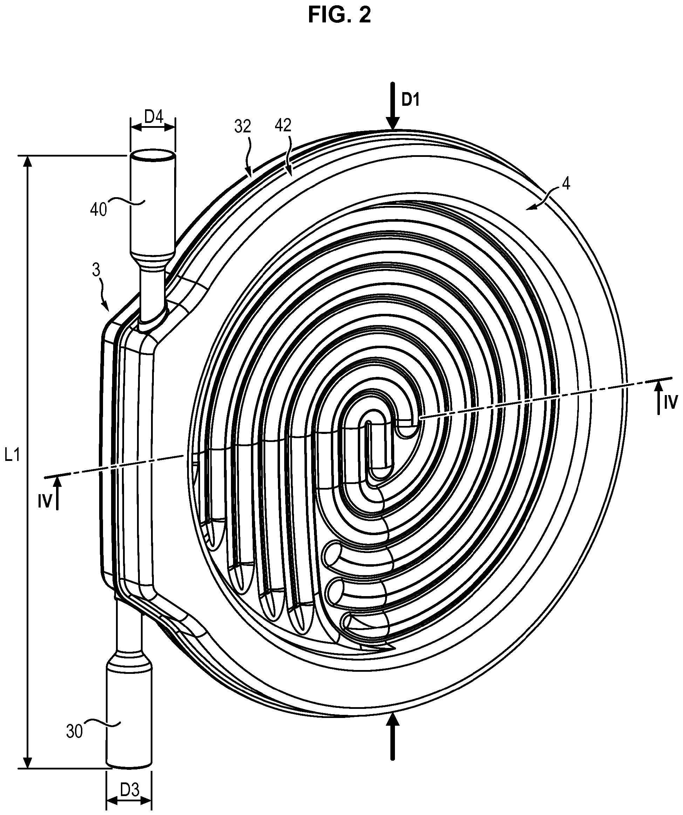

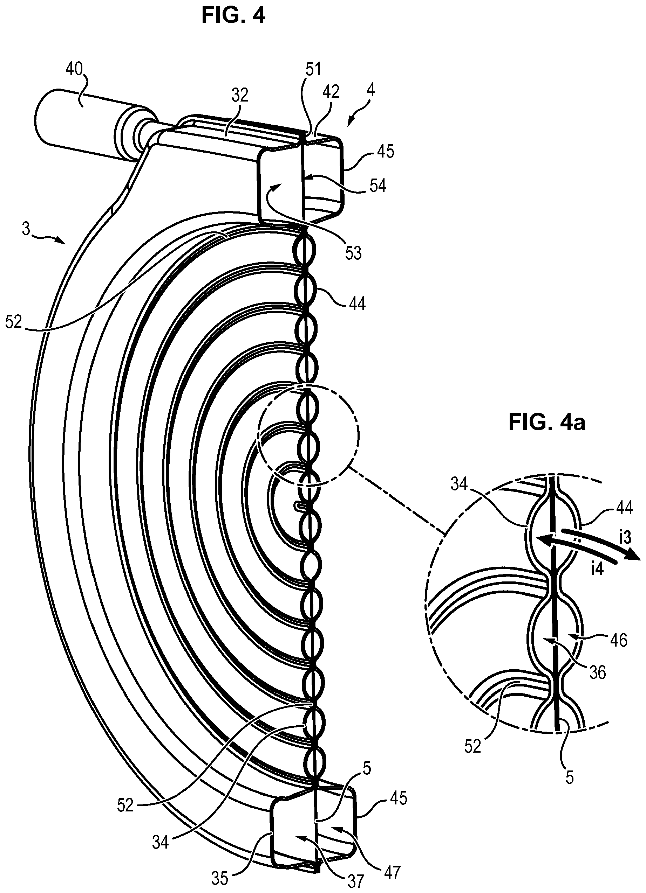

La face intérieure 411 est configurée en relief de façon à présenter au moins une gorge 44 dite "de circulation", (par exemple au nombre de cinq enroulées en spirale sur les figures 2 et 3), qui débouche du côté concave de la coupelle arrière 4. Le nombre et la configuration de ces gorges 44 peut varier comme cela sera décrit ultérieurement. De façon avantageuse, la section transversale de la gorge de circulation 44 est semi-circulaire ou sensiblement, comme on peut le voir sur la figure 4.

En outre, de façon avantageuse, la face intérieure 411 est également configurée en relief de façon à présenter le long du rebord périphérique 42, une gorge annulaire 45, dite "de distribution", qui débouche également du côté concave de la coupelle arrière 4 et qui est de plus grandes dimensions que la ou les gorges de circulation 44, (notamment plus profonde et plus large), comme on le voit sur la figure 4.

La coupelle avant 3 est symétrique par rapport à la coupelle arrière 4 à l'exception d'une cloison déflectrice qui sera décrite ultérieurement. Elle ne sera donc pas décrite en détails. Les mêmes éléments portent les mêmes références numériques, le premier chiffre 4 étant remplacé par le chiffre 3. Ainsi, la coupelle avant 3 comprend un fond 31, un rebord 32, une ouverture 320 pour le montage du raccord de sortie 30, une face intérieure 311, une face extérieure 312, au moins une gorge de circulation 34 et une gorge périphérique annulaire dite « de collecte » 35, ces gorges étant visibles sur la figure 4.

De préférence, les coupelles 3 et 4 sont fabriquées par emboutissage d'une tôle métallique. Le fond 31, 41 est donc déformé et les gorges formées sur la face intérieure 311, 411 apparaissent en saillie sur la face extérieure 312, 412.

La cloison centrale 5 est de préférence fabriquée à partir d'une tôle métallique mince. Elle présente un contour qui suit celui du fond 31, 41 des coupelles 3 et 4. Elle est percée d'une pluralité d'orifices 50 dont le rôle sera décrit ultérieurement.

La cloison 5 présente une face avant 53 et une face arrière 54.

Les deux coupelles avant 3 et arrière 4 sont assemblées l'une avec l'autre, de part et d'autre de la cloison centrale 5, de manière étanche aux fluides, leurs parties concaves respectives étant orientées l'une vers l'autre.

Comme on peut le voir sur la figure 4, les extrémités des rebords périphériques latéraux 32, 42 des deux coupelles 3, 4 sont ainsi soudées à la circonférence de la cloison centrale 5 par un cordon de soudure 51.

En outre, l'assemblage est effectué de façon que les deux bords (contours) de chacune des gorges de circulation 34 ou 44 soient au contact respectivement de la face avant 53 et de la face arrière 54 de la cloison centrale plane 5 et soudés à celle-ci, par des points ou un cordon de soudure 52. Il en est de même pour les deux gorges de distribution 35, 45.

Dans l'exemple de réalisation représenté sur les figures 2 à 5b où les coupelles 3, 4 sont symétriques de part et d'autre du plan de la cloison centrale 5, on constate que la soudure 52 relie de part en part les deux coupelles et la cloison 5, ce qui simplifie le procédé de fabrication.

Les deux coupelles 3, 4 et la cloison centrale 5 ainsi assemblés, les gorges de circulation 34, 44 définissent (délimitent) avec ladite cloison 5, des canaux de circulation 36, respectivement 46, tandis que les gorges de collecte 35 et de distribution 45 définissent avec cette même cloison 5 des canaux de collecte 37 et de distribution 47, (voir figures 4 et 4a).

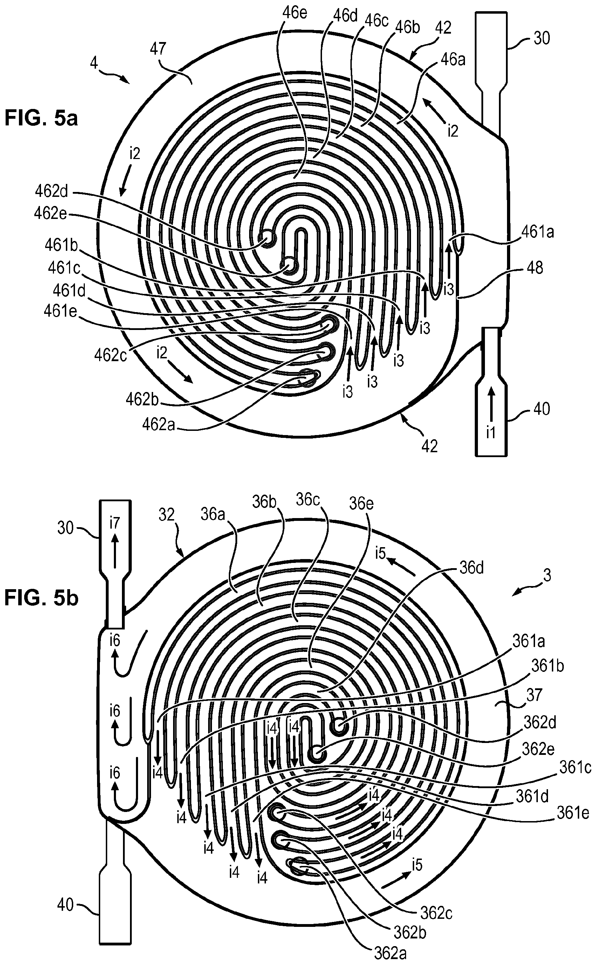

Un mode de réalisation particulier du déflecteur va maintenant être décrit en liaison avec les figures 5a et 5b.

Sur la figure 5a, on peut voir que la coupelle 4 comprend cinq gorges de circulation adjacentes, enroulées ensemble en spirale, depuis la gorge de distribution périphérique vers le centre de la coupelle. Elles forment avec la cloison 5 non représentée sur la figure, cinq canaux de circulation 46a, 46b, 46c, 46d et 46e, le canal 46a étant celui situé le plus à l'extérieur.

Ces cinq canaux de circulation 46a, 46b, 46c, 46d et 46e débouchent dans le canal de distribution 45 au niveau de l'une de leurs deux extrémités, dite "première extrémité", ces premières extrémités étant référencées respectivement 461a, 461 b, 461c, 461d et 461e. Leurs extrémités opposées respectives sont référencées 462a, 462b, 462c, 462d et 462e.

Une cloison déflectrice 48 relie en outre un point externe de l'extrémité 461a du canal le plus externe 46a au rebord 42.

Elle est disposée de façon à séparer le flux entrant par le raccord d'entrée 40, du flux qui a fait un tour du canal de distribution 47 et qui doit être distribué dans les canaux 46a à 46e.

Sur la figure 5b, on peut voir la coupelle 3 qui est quasiment symétrique à la coupelle 4 et qui ne sera pas décrite en détails. Les premières et secondes extrémités des cinq canaux de circulation 36a, 36b, 36c, 36d et 36e sont référencées respectivement 361a, 361b, 361c, 361d, 361e et 362a, 362b, 362c, 362d, 362e et la cloison déflectrice 38.

Cette cloison 38 présente une forme légèrement différente de la cloison 48. Elle relie le rebord 32 à un point externe de la première extrémité 361a du canal 36a le plus à l'extérieur mais est disposée de façon à séparer les flux sortant des différents canaux de circulation 36a à 36e, du flux collecté dans le canal de collecte 37 après qu'il ait effectué un tour dans ce canal afin de diriger ce flux vers le raccord de sortie 30.

Cinq orifices 50a, 50b, 50c, 50d, 50e sont en outre percés dans la cloison centrale 5 en regard des secondes extrémités respectives 462a, 462b, 462c, 462d, 462e et 362a, 362b, 362c, 362d, 362e des différents canaux (voir figure 3).

La circulation du fluide caloporteur tel que l'eau à l'intérieur du déflecteur 2 va maintenant être décrite.

Le fluide pénètre dans le déflecteur par le raccord d'entrée 40 (flèche i1), circule dans la totalité du canal de distribution 47 (flèches i2) puis est distribué dans les cinq canaux de circulation 46a, 46b, 46c, 46d et 46e à l'intérieur desquels la circulation s'effectue en parallèle (flèches i3). Ceci participe à réduire les pertes de charge. Le fluide est guidé ainsi grâce à la cloison déflectrice incurvée 48.

Une fois le fluide parvenu aux secondes extrémités 462a, 462b, 462c, 462d, 462e, il traverse la cloison 5 via les orifices respectifs 50a, 50b, 50c, 50d, 50e, pénètre dans les cinq canaux de circulation 36a, 36b, 36c, 36d et 36e (flèches i4 en figure 5b) et en ressort à leurs premières extrémités respectives 361a, 361b, 361c, 361d, 361e. Le fluide caloporteur est ensuite collecté dans le canal de collecte 37 (flèches i5), vient buter dans la cloison déflectrice 37 d'où il est renvoyé (flèches i6) vers le raccord de sortie 30 d'où il sort (flèche i7).

En raison de la forme symétrique des canaux des coupelles 3, 4, on constate donc que le fluide circule à contre-courant (flèches i3, i4) dans chaque paire de canaux 36a, 46a jusqu'à 36e, 46e, situés de part et d'autre de la cloison centrale 5, (voir également la figure 4a).

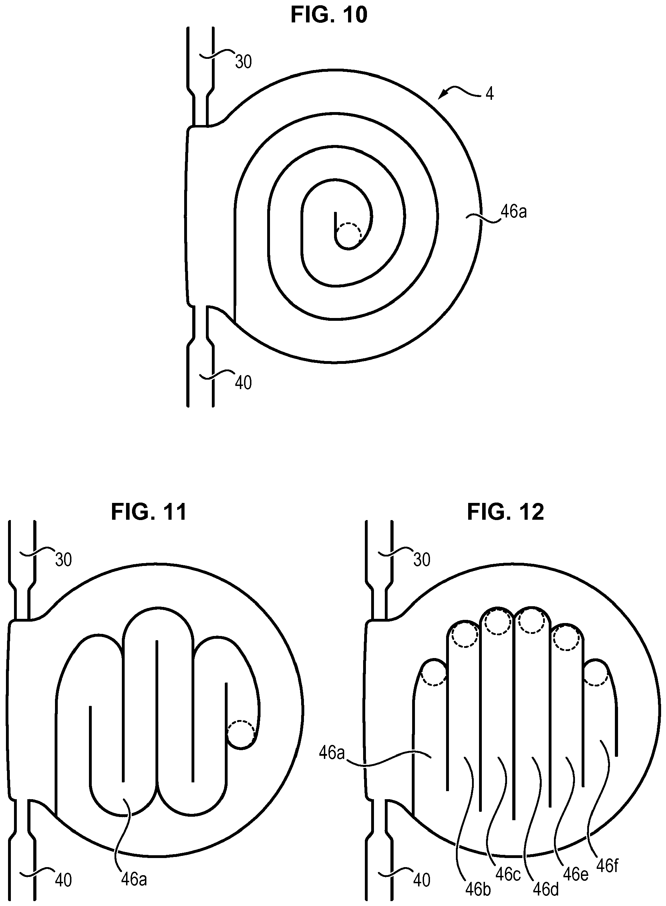

Le mode de réalisation qui vient d'être décrit n'est pas limitatif et il pourrait y avoir plus ou moins de cinq canaux de circulation. Sur la figure 10, par exemple la coupelle 4 ne comprend qu'un seul canal de circulation 46a enroulé en spirale sur lui-même.

En se reportant aux figures 11 et 12, on peut également voir que le tracé des canaux de circulation sur le fond des coupelles n'est pas limité à une forme en spirale, mais que toute autre forme est possible, par exemple une forme en serpentin (figure 11) ou rectiligne (par exemple six canaux 46a à 46f parallèles sur la figure 12).

Quelle que soit la forme des canaux de circulation, ceux-ci sont conformés de façon à s'étendre sur au moins une partie des fonds 31, 41 et de préférence sur la totalité de la surface à l'intérieur des canaux de collecte ou de distribution.

Enfin, on notera que la répartition symétrique des canaux de part et d'autre de la cloison 5 est avantageuse pour simplifier la soudure mais non obligatoire. Le ou les canaux de circulation formé(s) dans la coupelle avant 3 pourrai (en)t ainsi présenter une forme particulière différente de celle du ou des canaux de circulation formé(s) dans la coupelle arrière 4.

Le déflecteur décrit précédemment est destiné à être installé dans un échangeur de chaleur à condensation.

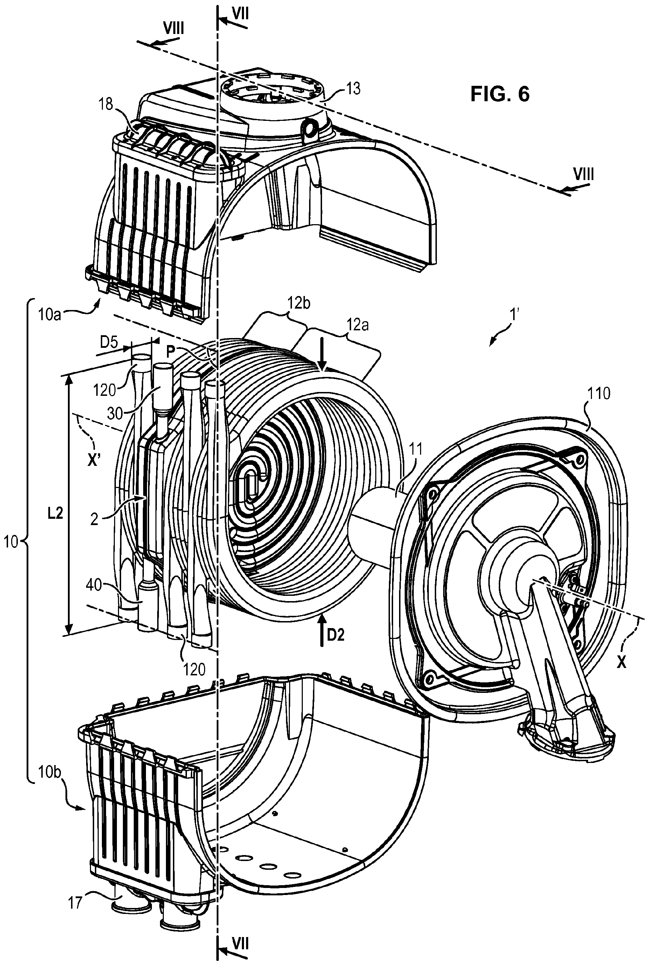

Un premier mode de réalisation d'un tel échangeur va maintenant être décrit en liaison avec les figures 6 à 9.

Les éléments constitutifs identiques à ceux décrits pour l'échangeur 1 de l'art antérieur en liaison avec la figure 1 ne seront pas de nouveau décrits en détails et portent les mêmes références numériques. L'échangeur conforme à l'invention porte simplement la référence 1'. Les deux parties 10a, 10b de l'enveloppe 10 sont représentées en position séparée sur la figure 6.

L'échangeur représenté sur les figures 6 à 8 comprend deux faisceaux de tubes coaxiaux, placés bout à bout, dont l'un 12a fait office d'échangeur primaire et l'autre 12b d'échangeur secondaire. Le faisceau 12a comprend deux tubes adjacents formant un enroulement hélicoïdal d'axe X-X'. Le faisceau 12b comprend un seul tube également enroulé en hélice, d'axe X-X'.

Les tubes sont réalisés en matériau thermiquement bon conducteur.

De façon avantageuse, les tubes présentent une section droite aplatie et ovale dont les grands côtés sont perpendiculaires à l'axe X-X'.

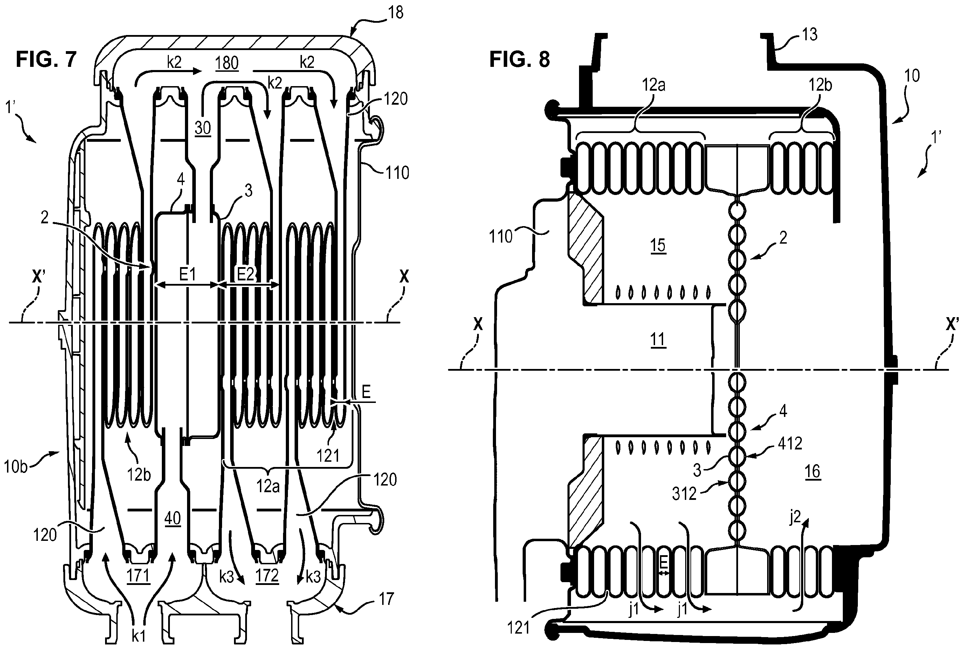

De façon avantageuse, des bossages (non représentés) prévus sur les grandes faces des tubes jouent le rôle d'entretoises, ils permettent de délimiter entre chaque spire de l'enroulement un interstice 121 de valeur calibrée, sensiblement constante et plus faible que l'épaisseur E de la section droite des tubes (voir figures 7 et 8).

Chaque tube possède des portions d'extrémité droite, c'est-à-dire d'axe rectiligne, et de section progressivement variable, dont la partie d'extrémité débouchante (embouchure) est circulaire.

Les trois tubes formant les différents faisceaux 12a 12b sont identiques, de même longueur, de même diamètre de tube et de même diamètre d'enroulement hélicoïdal, comme on peut le voir sur la figure 6. Ils sont positionnés dans l'enveloppe 10a, 10b de façon que les axes longitudinaux de leurs embouchures respectives 120 s'étendent dans un même plan P.

De façon avantageuse, le déflecteur 2 conforme à l'invention est dimensionné de façon que son diamètre externe D1 soit identique ou sensiblement identique au diamètre externe D2 des faisceaux de tubes 12a, 12b. De même, de façon avantageuse, les diamètres extérieurs respectifs D3 et D4 des raccords de sortie 30 et d'entrée 40 (voir figure 2) sont identiques au diamètre de sortie D5, D6 des embouchures 120 des faisceaux de tubes 12a, 12b. Enfin, la longueur L1 entre les deux extrémités des raccords d'entrée 40 et de sortie 30 (voir figure 2) est avantageusement identique à la longueur L2 entre les deux extrémités des deux embouchures 120 de chaque enroulement de tube des faisceaux 12a, 12b (voir figure 6).

De préférence également, l'épaisseur E1 du déflecteur 2 de sa partie la plus épaisse (au niveau des canaux de collecte 35 et de distribution 45) est identique ou sensiblement identique à l'épaisseur E2 d'un enroulement de tube en hélice (voir figures 7 et 8).

Ainsi, la géométrie du déflecteur 2 permet de le placer dans l'échangeur 1' en lieu et place d'un tube, qu'il remplace avantageusement en même temps que le déflecteur 14 et son isolant réfractaire de l'état de la technique.

Le raccordement des faisceaux de tubes 12a, 12b et du déflecteur 2 aux moyens permettant de faire circuler le fluide caloporteur s'effectue comme décrit ci-après en liaison avec les figures 6 et 8.

L'enveloppe 10 comprend deux collecteurs latéraux 17, 18, qui permettent le branchement de l'échangeur 1', de manière classique, sur un conduit d'amenée du fluide froid qui doit être réchauffé, le transfert de ce fluide d'un tube à l'autre, et l'évacuation du fluide réchauffé.

Les embouchures d'entrée et de sortie des tubes sont serties de manière étanche dans des ouvertures appropriées prévues dans l'enveloppe 10, pour déboucher à l'intérieur des collecteurs 17, 18.

Le collecteur d'entrée-sortie 17 comprend une chambre d'entrée 171 et une chambre de sortie 172 aptes à être raccordées sur un tuyau d'amenée du fluide à réchauffer et, respectivement, un tuyau d'évacuation du fluide réchauffé.

La chambre d'entrée 171 est connectée à l'embouchure d'entrée 120 de faisceau de tube 12b et au raccord d'entrée 40, dans lesquels rentre le fluide à réchauffer. La chambre de sortie 172 est connectée aux embouchures de sortie 12, du faisceau de tubes 12a, par lesquels sort le fluide réchauffé.

Le collecteur opposé 18 possède une chambre de transfert unique 180, qui est raccordée à la fois aux embouchures 120 des faisceaux 12a, 12b et au raccord de sortie 30. Le raccord 30 est donc en communication de fluide avec le faisceau 12a.

Le flux (flèches k1) entrant dans la chambre 17 est subdivisé en deux flux qui parcourent chacun le faisceau 12b et le déflecteur 2, se rejoignent dans la chambre 180 et sont transférés (flèches k2) dans les tubes du faisceau 12a pour déboucher (flèches k3) dans la chambre 172 et en ressortir.

Dans le mode de réalisation précité, c'est le même fluide caloporteur qui circule dans le déflecteur 2 et dans les faisceaux de tubes 12a et 12b, toutefois, il serait également possible d'avoir deux alimentations distinctes de fluide caloporteur, une pour le déflecteur 2 et l'autre pour les faisceaux de tubes 12a, 12b.

Les gaz chauds suivent le même trajet que celui expliqué en liaison avec la figure 1. Ils circulent à contre-courant du fluide caloporteur (voir les flèches j1, J2 en figure 8).

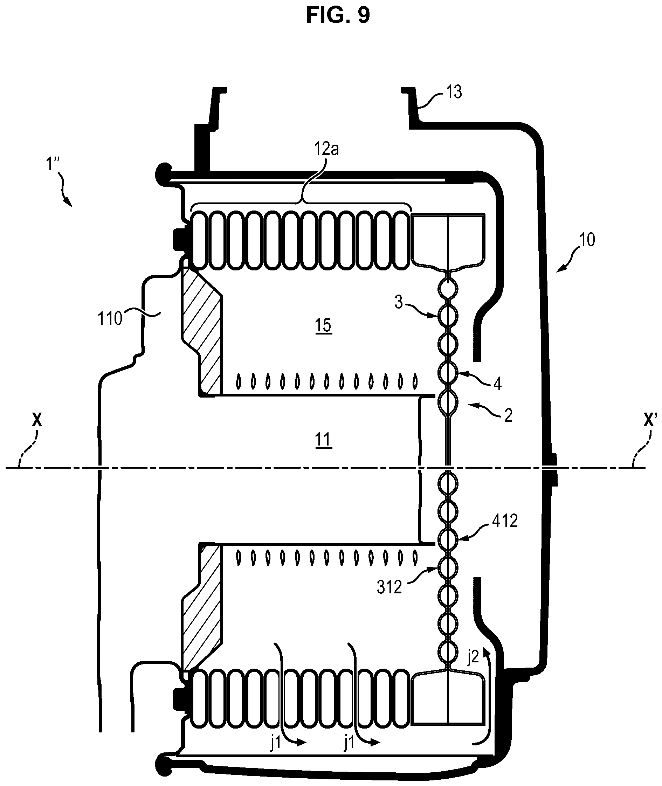

Un autre mode de réalisation de l'échangeur, référencé 1", va maintenant être décrit en liaison avec la figure 9. Il diffère de l'échangeur 1' en ce qu'il ne comprend pas de faisceau de tubes 12b faisant office d'échangeur secondaire en aval du déflecteur 2, (par rapport au sens de circulation des gaz chauds). Pour le reste, il est identique et les mêmes éléments portent les mêmes références numériques.

Dans ce cas, les gaz chauds, après avoir léché la face extérieure 312 de la coupelle avant 3 et traversé les interstices 121 entre les spires du faisceau primaire 12a, ressortent directement en léchant la face extérieure 412 de la coupelle arrière 4, au contact de laquelle ils sont refroidis, avant de s'échapper par la manchette 13.

Le déflecteur 2 qui vient d'être décrit pourrait également être utilisé dans un échangeur de chaleur à deux faisceaux de tubes, l'un disposé autour d'un brûleur, l'autre à côté en parallèle, comme décrit dans le document FR 2 843 189 ou dans un échangeur à trois faisceaux de tubes, deux disposés autour de brûleur, l'autre à côté en parallèle des deux premiers, comme décrit dans le document FR 2 913 105.

Dans tous les modes de réalisation qui viennent d'être décrits, le déflecteur conforme à l'invention présente l'avantage que ses deux surfaces extérieures 312, 412 sont refroidies par une circulation d'eau parfaitement maitrisée dans tous les canaux de circulation 36a à 36e et 46a à 46e. Tout point chaud est ainsi évité.

En outre, les gaz sortants abaissent sensiblement leur température au contact de la surface extérieure 412 de la coupelle arrière 4. La température de sortie des gaz (fumées) est ainsi proche voire égale à la température de l'eau qui rentre dans l'échangeur (voisine de 30°C). Le taux de condensation dans les chambres de combustion 15 et de condensation 16 est intensifié.

Enfin, les émissions d'oxydes d'azote (NOx) sont inférieures d'environ 20% à celles d'un échangeur de chaleur avec un déflecteur en matériau réfractaire de l'art antérieur.

## Revendications

1. Déflecteur (2) pour échangeur de chaleur à condensation, qui comprend deux coupelles dites "avant" (3) et "arrière" (4), réalisées dans un matériau bon conducteur thermique, un raccord d'entrée (40) et un raccord de sortie (30), chaque coupelle (3, 4) comprenant un fond (31, 41) entouré d'un rebord périphérique (32, 42), les deux coupelles (3, 4) étant assemblées l'une avec l'autre de manière étanche aux fluides, de façon que leurs parties concaves respectives soient orientées l'une vers l'autre, la face intérieure (311) du fond de la coupelle avant (3) étant configurée en relief de façon à présenter au moins une gorge (34) de circulation d'un fluide caloporteur, tel que de l'eau, qui s'étend sur au moins une partie dudit fond, la face intérieure (411) du fond de la coupelle arrière (4) étant configurée en relief de façon à présenter au moins une autre gorge (44) de circulation dudit fluide caloporteur, qui s'étend sur au moins une partie dudit fond, ledit déflecteur comprend une cloison centrale plane (5) réalisée dans une matériau bon conducteur thermique, les deux coupelles (3, 4) sont assemblées de part et d'autre de ladite cloison centrale plane (5) de manière étanche aux fluides, de sorte que ladite au moins une gorge de circulation (34) de la coupelle avant (3) forme avec ladite cloison centrale plane (5) au moins un canal de circulation (36a, 36b, 36c, 36d, 36e), dans lequel ledit fluide caloporteur est destiné à circuler, et ladite au moins une gorge de circulation (44) de la coupelle arrière (4) forme avec ladite cloison centrale plane (5) au moins un canal de circulation (46a, 46b, 46c, 46d, 46e), dans lequel ledit fluide caloporteur est destiné à circuler, la première (361a, 361b, 361c, 361d, 361e, 461a, 461b, 461c, 461d, 461e) des deux extrémités de chaque canal de circulation (36a, 36b, 36c, 36d, 36e, 46a, 46b, 46c, 46d, 46e) de la coupelle avant (3), respectivement de la coupelle arrière (4), étant en communication de fluide avec le raccord de sortie (30), respectivement le raccord d'entrée (40), dudit déflecteur et la seconde extrémité (362a, 362b, 362c, 362d, 362e) de chaque canal de circulation de la coupelle avant (3) étant raccordée à la seconde extrémité (462a, 462b, 462c, 462d, 462e) d'un canal de la coupelle arrière (4), via un orifice (50a, 50b, 50c, 50d, 50e) percé dans ladite cloison centrale (5), de sorte que ledit fluide caloporteur peut circuler du raccord d'entrée (40) au raccord de sortie (30), au travers dudit au moins un canal de circulation (46a, 46b, 46c, 46d, 46e) de la coupelle arrière (4) puis dudit au moins un canal de circulation (36a, 36b, 36c, 36d, 36e) de la coupelle avant (3) en s'écoulant de part et d'autre de ladite cloison centrale (5).

2. Déflecteur selon la revendication 1, **caractérisé en ce que** le canal ou les canaux de circulation (36a, 36b, 36c, 36d, 36e) de la coupelle avant (3) et le canal ou les canaux de circulation (46a, 46b, 46c, 46d, 46e) de la coupelle arrière (4) sont symétriques par rapport à un plan de symétrie passant par ladite cloison centrale (5), de sorte que le fluide caloporteur circule dans le canal ou les canaux de circulation de la coupelle avant (3) à contre-courant du sens dans lequel il circule dans un canal ou les canaux de la coupelle arrière (4) situés en regard.

3. Déflecteur selon la revendication 1 ou 2, **caractérisé en ce que** le fond (31) de la coupelle avant (3) et le fond (41) de la coupelle arrière (4) sont configurés en relief de façon à former une gorge périphérique annulaire, dite respectivement "gorge de collecte" (35) et "gorge de distribution (45), qui s'étend autour desdites gorges de circulation (34, 44), les deux coupelles (3, 4) étant assemblées de part et d'autre de la cloison centrale (5), de façon les gorges de collecte (35) et de distribution (45) forment avec ladite cloison centrale respectivement un canal de collecte (37) et un canal de distribution (47), le raccord d'entrée (40) débouchant dans ledit canal de distribution (45) et le raccord de sortie (30) débouchant dans ledit canal de collecte (35), lesdits canaux de distribution (45) et de collecte (35) étant en outre muni chacun intérieurement d'une cloison déflectrice (48, 38) qui permet de guider le fluide caloporteur du canal de distribution (45) vers les canaux de circulation (46a, 46b, 46c, 46d, 46e) de la coupelle arrière (4) et respectivement des canaux de circulation (36a, 36b, 36c, 36d, 36e) de la coupelle avant (3) vers le canal de collecte (35).

4. Déflecteur selon l'une quelconque des revendications précédentes, **caractérisé en ce que** le canal ou les canaux de circulation (36a, 36b, 36c, 36d, 36e, 46a, 46b, 46c, 46d, 46e) sont en forme de spirale.

5. Déflecteur selon l'une quelconque des revendications 1 à 3, **caractérisé en ce que** le canal ou les canaux de circulation (36a, 36b, 36c, 36d, 36e, 46a, 46b, 46c, 46d, 46e) sont en forme de serpentin.

6. Déflecteur selon l'une quelconque des revendications 1 à 3, **caractérisé en ce que** le canal ou les canaux de circulation (36a, 36b, 36c, 36d, 36e, 46a, 46b, 46c, 46d, 46e) sont en forme rectiligne.

7. Déflecteur selon la revendication 3, **caractérisé en ce que** les coupelles avant (3) et arrière (4) comprennent au moins deux canaux de circulation (36a, 36b, 36c, 36d, 36e, 46a, 46b, 46c, 46d, 46e) disposés enroulés côte à côte en spirale et à l'intérieur desquels le fluide caloporteur circule en parallèle, **en ce que** les premières extrémités (361a, 361b, 361c, 361d, 361e) desdits canaux de circulation (36a, 36b, 36c, 36d, 36e) de la coupelle avant (3) débouchent dans le canal de collecte (37) et **en ce que** les premières extrémités (461a, 461b, 461c, 461d, 461e) desdits canaux de circulation (46a, 46b, 46c, 46d, 46e) de la coupelle arrière (4) débouchent dans le canal de distribution (47).

8. Echangeur de chaleur à condensation (1', 1") comprenant au moins un faisceau (12a, 12b) consistant en un tube ou un groupe de tubes disposés bout à bout, enroulés en hélice, ce tube étant réalisé en matériau thermiquement bon conducteur, ce ou ces faisceaux étant monté(s) fixement à l'intérieur d'une enveloppe (10) étanche aux gaz, cette enveloppe étant munie d'une manchette (13) d'évacuation des gaz, des moyens étant prévus pour faire circuler au moins un fluide caloporteur à réchauffer, tel que de l'eau, à l'intérieur du ou desdits faisceau(x) de tube(s) (12a, 12b), l'échangeur comprenant également un déflecteur disposé à l'extrémité dudit faisceau (12a) d'au moins un tube ou intercalé entre deux de ces faisceaux adjacents (12a, 12b), et des moyens d'amenée ou des moyens de production de gaz chauds (11), **caractérisé en ce que** ledit déflecteur (2) est conforme à l'une quelconque des revendications 1 à 7 et **en ce que** le déflecteur (2) et lesdits moyens d'amenée ou moyens de production de gaz chauds (11) sont disposés de façon à ce que lesdits gaz chauds lèchent la face extérieure (312) de la coupelle avant (3) du déflecteur puis traversent radialement ou approximativement radialement le faisceau (12a) de tube ou de groupe de tubes situé en amont dudit déflecteur (2) en passant à travers les interstices (121) séparant ses spires, de l'intérieur vers l'extérieur et enfin lèchent la face extérieure (412) de la coupelle arrière (4) dudit déflecteur, avant d'être évacués par ladite manchette d'évacuation des gaz (13).

9. Echangeur (1', 1") selon la revendication 8, **caractérisé en ce que** le raccord de sortie (30) dudit déflecteur (2) est en communication de fluide avec au moins l'un des faisceaux de tubes (12a), de sorte que c'est le même fluide caloporteur qui circule dans le déflecteur (2) et dans le ou les faisceaux de tube(s) (12a).

10. Echangeur (1', 1") selon la revendication 8 ou 9, **caractérisé en ce que** le diamètre externe du déflecteur (2) est identique ou sensiblement identique au diamètre externe du ou des faisceaux de tubes (12a, 12b) et **en ce que** la longueur (L1) entre les deux extrémités du raccord d'entrée (40) et du raccord de sortie (30) du déflecteur (2) est identique ou sensiblement identique à la longueur (L2) entre les deux extrémités des embouchures (120) du tube de chaque faisceau de tube (12a, 12b).

11. Echangeur (1', 1") selon l'une des revendications 8 à 10, **caractérisé en ce que** le déflecteur (2) est intercalé entre deux faisceaux (12a, 12b) de tube ou de groupe de tubes, le faisceau (12a) situé en amont du déflecteur (2) faisant office d'échangeur primaire et le faisceau (12b) situé en aval du déflecteur par rapport au sens d'écoulement des gaz chauds faisant office d'échangeur secondaire, de sorte que les gaz chauds lèchent la face extérieure (312) de la coupelle avant (3) du déflecteur puis traversent radialement ou approximativement radialement le faisceau (12a) de tube ou de groupe de tubes de l'échangeur primaire en passant à travers les interstices (121) séparant ses spires, de l'intérieur vers l'extérieur, puis ensuite traversant radialement ou approximativement radialement le faisceau (12b) de tube ou de groupe de tubes de l'échangeur secondaire en passant à travers les interstices (121) séparant ses spires, de l'extérieur vers l'intérieur, et enfin lèchent la face extérieure (412) de la coupelle arrière (4) dudit déflecteur avant d'être évacués par ladite manchette d'évacuation des gaz (13).

12. Echangeur (1', 1") selon l'une des revendications 8 à 11, **caractérisé en ce que** la paroi du ou des tube(s) d'un faisceau de tube (12a, 12b) présente une section droite aplatie et ovale dont le grand axe est perpendiculaire, ou approximativement perpendiculaire, à celui (X-X') de l'hélice, tandis que la largeur de l'interstice séparant deux spires adjacentes est constante et plus faible que l'épaisseur de ladite section droite.

## Patentansprüche

1. Deflektor (2) für Kondensationswärmetauscher, der zwei Schalen, eine sogenannte "vordere" (3) und eine sogenannte "hintere" (4), die aus einem Material mit guter Wärmeleitfähigkeit bestehen, einen Eintrittsanschluss (40) und einen Austrittsanschluss (30) umfasst, wobei jede Schale (3, 4) einen Boden (31, 41) umfasst, der von einem umlaufenden Rand (32, 42) umgeben ist, wobei die zwei Schalen (3, 4) auf fluiddichte Weise aneinander zusammengebaut sind, derart, dass ihre jeweiligen konkaven Teile zueinander hin ausgerichtet sind, wobei die innere Seite (311) des Bodens der vorderen Schale (3) erhaben ausgestaltet ist, derart dass sie mindestens eine Auskehlung (34) für den Umlauf eines Wärmeträgers, wie beispielsweise Wasser, aufweist, die sich auf zumindest einem Teil des Bodens erstreckt, wobei die innere Seite (411) des Bodens der hinteren Schale (4) erhaben ausgestaltet ist, derart dass sie mindestens eine weitere Auskehlung (44) für den Umlauf des Wärmeträgers aufweist, die sich über zumindest einen Teil des Bodens erstreckt, wobei der Deflektor eine ebene mittlere Trennwand (5) umfasst, die aus einem Material mit guter Wärmeleitfähigkeit hergestellt ist, die zwei Schalen (3, 4) auf fluiddichte Weise auf beiden Seiten der ebenen mittleren Trennwand (5) zusammengebaut sind, derart dass zumindest eine Umlaufauskehlung (34) der vorderen Schale (3) mit der ebenen mittleren Trennwand (5) mindestens einen Umlaufkanal (36a, 36b, 36c, 36d, 36e) bildet, in dem der Wärmeträger bestimmt ist, umzulaufen, und die mindestens eine Umlaufauskehlung (44) der hinteren Schale (4) mit der ebenen mittleren Trennwand (5) mindestens einen Umlaufkanal (46a, 46b, 46c, 46d, 46e) bildet, in dem der Wärmeträger bestimmt ist, umzulaufen, wobei das erste (361a, 361b, 361c, 361d, 361e, 461a, 461b, 461c, 461d, 461e) der zwei Enden von jedem Umlaufkanal (36a, 36b, 36c, 36d, 36e, 46a, 46b, 46c, 46d, 46e) der vorderen Schale (3) beziehungsweise der hinteren Schale (4) sich in Fluidverbindung mit dem Austrittsanschluss (30) beziehungsweise dem Eintrittsanschluss (40) des Deflektors befindet und das zweite Ende (362a, 362b, 362c, 362d, 362e) von jedem Umlaufkanal der vorderen Schale (3) mit dem zweiten Ende (462a, 462b, 462c, 462d, 462e) eines Kanals der hinteren Schale (4) über eine Öffnung (50a, 50b, 50c, 50d, 50e) verbunden ist, die in die mittlere Trennwand (5) gebohrt ist, derart, dass der Wärmeträger vom Eintrittsanschluss (40) zum Austrittsanschluss (30) durch den mindestens einen Umlaufkanal (46a, 46b, 46c, 46d, 46e) der hinteren Schale (4) und dann von dem mindestens einen Umlaufkanal (36a, 36b, 36c, 36d, 36e) der vorderen Schale (3) umlaufen kann, indem er auf beiden Seiten der mittleren Trennwand (5) strömt.

2. Deflektor nach Anspruch 1, **dadurch gekennzeichnet, dass** der Umlaufkanal oder die Umlaufkanäle (36a, 36b, 36c, 36d, 36e) der vorderen Schale (3) und der Umlaufkanal oder die Umlaufkanäle (46a, 46b, 46c, 46d, 46e) der hinteren Schale (4) symmetrisch in Bezug auf eine Symmetrieebene sind, die durch die mittlere Trennwand (5) verläuft, derart dass der Wärmeträger in dem Umlaufkanal oder den Umlaufkanälen der vorderen Schale (3) in Gegenströmung zu der Richtung umläuft, in der er in einem Kanal oder den Kanälen der hinteren Schale (4) umläuft, die sich gegenüberstehend befinden.

3. Deflektor nach Anspruch 1 oder 2, **dadurch gekennzeichnet, dass** der Boden (31) der vorderen Schale (3) und der Boden (41) der hinteren Schale (4) erhaben ausgestaltet sind, derart dass sie eine ringförmige umlaufende Auskehlung, eine sogenannte "Sammelauskehlung" (35) beziehungsweise "Verteilungsauskehlung" (45), bilden, die sich um die Umlaufauskehlungen (34, 44) herum erstreckt, wobei die zwei Schalen (3, 4) auf beiden Seiten der mittleren Trennwand (5) zusammengebaut sind, derart dass die Sammel- (35) und Verteilungsauskehlungen (45) mit der mittleren Trennwand einen Sammelkanal (37) beziehungsweise einen Verteilungskanal (47) bilden, wobei der Eintrittsanschluss (40) in den Verteilungskanal (45) mündet und der Austrittsanschluss (30) in den Sammelkanal (35) mündet, wobei die Verteilungs- (45) und Sammelkanäle (35) ferner jeweils innen mit einer ablenkenden Trennwand (48, 38) versehen sind, die das Führen des Wärmeträgers von dem Verteilungskanal (45) hin zu den Umlaufkanälen (46a, 46b, 46c, 46d, 46e) der hinteren Schale (4) beziehungsweise den Umlaufkanälen (36a, 36b, 36c, 36d, 36e) der vorderen Schale (3) hin zum Sammelkanal (35) ermöglicht.

4. Deflektor nach einem der vorhergehenden Ansprüche, **dadurch gekennzeichnet, dass** der Umlaufkanal oder die Umlaufkanäle (36a, 36b, 36c, 36d, 36e, 46a, 46b, 46c, 46d, 46e) spiralförmig sind.

5. Deflektor nach einem der Ansprüche 1 bis 3, **dadurch gekennzeichnet, dass** der Umlaufkanal oder die Umlaufkanäle (36a, 36b, 36c, 36d, 36e, 46a, 46b, 46c, 46d, 46e) schlangenförmig sind.

6. Deflektor nach einem der Ansprüche 1 bis 3, **dadurch gekennzeichnet, dass** der Umlaufkanal oder die Umlaufkanäle (36a, 36b, 36c, 36d, 36e, 46a, 46b, 46c, 46d, 46e) eine geradlinige Form aufweisen.

7. Deflektor nach Anspruch 3, **dadurch gekennzeichnet, dass** die vordere (3) und hintere (4) Schale mindestens zwei Umlaufkanäle (36a, 36b, 36c, 36d, 36e, 46a, 46b, 46c, 46d, 46e) umfassen, die spiralförmig nebeneinander aufgewickelt angeordnet sind und in deren Inneren der Wärmeträger parallel umläuft, dadurch, dass die ersten Enden (361a, 361b, 361c, 361d, 361e) der Umlaufkanäle (36a, 36b, 36c, 36d, 36e) der vorderen Schale (3) in den Sammelkanal (37) münden, und dadurch, dass die ersten Enden (461a, 461b, 461c, 461d, 461e) der Umlaufkanäle (46a, 46b, 46c, 46d, 46e) der hinteren Schale (4) in den Verteilungskanal (47) münden.

8. Kondensationswärmetauscher (1', 1"), der mindestens ein Bündel (12a, 12b) umfasst, das aus einem Rohr oder einer Gruppe von Rohren besteht, die, Ende an Ende angeordnet, schneckenförmig aufgewickelt sind, wobei dieses Rohr aus einem Material mit guter Wärmeleitfähigkeit ausgeführt ist, dieses oder diese Bündel fest im Inneren einer gegenüber Gasen dichten Hülle (10) montiert ist/sind, wobei diese Hülle mit einer Manschette (13) für den Ablass der Gase versehen ist, wobei Mittel vorgesehen sind, um mindestens einen zu erwärmenden Wärmeträger, wie beispielsweise Wasser, im Inneren des Rohrbündels oder der Rohrbündel (12a, 12b) in Umlauf zu bringen, wobei der Tauscher auch einen Deflektor, der am Ende des Bündels (12a) von mindestens einem Rohr angeordnet oder zwischen zwei von diesen benachbarten Bündeln (12a, 12b) eingeschoben ist, und Mittel zur Zufuhr oder Mittel zur Erzeugung von Heißgasen (11) umfasst, **dadurch gekennzeichnet, dass** der Deflektor (2) nach einem der Ansprüche 1 bis 7 ist, und dadurch, dass der Deflektor (2) und die Mittel zur Zufuhr oder Mittel zur Erzeugung von Heißgasen (11) derart angeordnet sind, dass die Heißgase die äußere Seite (312) der vorderen Schale (3) des Deflektors bestreichen, dann das Rohr- oder Rohrgruppenbündel (12a), das sich stromaufwärts des Deflektors (2) befindet, radial oder ungefähr radial durchqueren, indem sie die Zwischenräume (121), die seine Windungen trennen, von innen nach außen durchqueren, und schließlich die äußere Seite (412) der hinteren Schale (4) des Deflektors bestreichen, bevor sie durch die Manschette für den Ablass der Gase (13) abgelassen werden.

9. Tauscher (1', 1") nach Anspruch 8, **dadurch gekennzeichnet, dass** der Austrittsanschluss (30) des Deflektors (2) in Fluidverbindung mit mindestens einem von den Rohrbündeln (12a) ist, derart dass derselbe Wärmeträger in dem Deflektor (2) und in dem Rohrbündel oder den Rohrbündeln (12a) umläuft.

10. Tauscher (1', 1") nach Anspruch 8 oder 9, **dadurch gekennzeichnet, dass** der Außendurchmesser des Deflektors (2) mit dem Außendurchmesser des Rohrbündels oder der Rohrbündel (12a, 12b) identisch oder im Wesentlichen identisch ist, und dadurch, dass die Länge (L1) zwischen den zwei Enden des Eintrittsanschlusses (40) und des Austrittsanschlusses (30) des Deflektors (2) identisch oder im Wesentlichen identisch mit der Länge (L2) zwischen den zwei Enden der Mündungen (120) des Rohres von jedem Rohrbündel (12a, 12b) ist.

11. Tauscher (1, 1") nach einem der Ansprüche 8 bis 10, **dadurch gekennzeichnet, dass** der Deflektor (2) zwischen zwei Rohr- oder Rohrgruppenbündeln (12a, 12b) eingeschoben ist, wobei das Bündel (12a), das sich stromaufwärts des Deflektors (2) befindet, als Haupttauscher dient, und das Bündel (12b), das sich in Bezug auf die Strömungsrichtung der Heißgase stromabwärts des Deflektors befindet, als Nebentauscher dient, derart, dass die Heißgase die äußere Seite (312) der vorderen Schale (3) des Deflektors bestreichen, dann radial oder ungefähr radial das Rohr- oder Rohrgruppenbündel (12a) des Haupttauschers durchqueren, indem sie die Zwischenräume (121), die die Windungen trennen, von innen nach außen durchqueren, dann das Rohr- oder Rohrgruppenbündel (12b) des Nebentauschers radial oder ungefähr radial durchqueren, indem sie die Zwischenräume (121), die die Windungen trennen, von außen nach innen durchqueren und schließlich die äußere Seite (412) der hinteren Schale (4) des vorderen Deflektors bestreichen, bevor sie über die Manschette für den Ablass der Gase (13) abgelassen werden.

12. Tauscher (1', 1") nach einem der Ansprüche 8 bis 11, **dadurch gekennzeichnet, dass** die Wand des oder der Rohre eines Rohrbündels (12a, 12b) einen abgeflachten und ovalen Querschnitt aufweist, dessen Hauptachse senkrecht oder ungefähr senkrecht zu derjenigen (X-X') der Schnecke ist, während die Breite des Zwischenraums, der zwei benachbarte Windungen trennt, konstant und kleiner als die Dicke des Querschnitts ist.

## Claims

1. A deflector (2) for a condensation heat exchanger, which comprises two cups, called "front" (3) and "rear" (4), made of a material with good thermal conductivity, an inlet connector (40) and an outlet connector (30), each cup (3, 4) comprising a bottom (31, 41) surrounded by a peripheral rim (32, 42), the two cups (3, 4) being assembled to one another in a fluid-tight manner, so that their respective concave portions are oriented toward one another, the interior face (311) of the bottom of the front cup (3) being configured in relief so as to have at least one groove (34), of "circulation" of a heat transfer fluid, such as water, which extends over at least a portion of said bottom, the interior face (411) of the bottom of the rear cup (4) being configured in relief so as to have at least one groove (44) of circulation of said heat transfer fluid, which extends over at least a portion of said bottom, said deflector comprises a flat central partition (5) made of a material with good thermal conductivity, the two cups (3, 4) are assembled in a fluid-tight manner on either side of said central partition (5), so that said at least one circulation groove (34) of the front cup (3) forms with said flat central partition (5) at least one circulation channel (36a, 36b, 36c, 36d, 36e), wherein said heat-transfer fluid is intended to circulate and said at least one circulation groove (44) of the rear cup (4) forms with said flat central partition (5) at least one circulation channel (46a, 46b, 46c, 46d, 46e), wherein said heat-transfer fluid is intended to circulate, the first (361a, 361b, 361c, 361d, 361e, 461a, 461b, 461c, 461d, 461e) of the two ends of each circulation channel (36a, 36b, 36c, 36d, 36e, 46a, 46b, 46c, 46d, 46e) of the front cup (3), respectively of the rear cup (4), being in fluid communication with the outlet connector (30), respectively the inlet connector (40) of said deflector and the second end (362a, 362b, 362c, 362d, 362e) of each circulation channel of the front cup (3) being connected to the second end (462a, 462b, 462c, 462d, 462e) of a channel of the rear cup (4), via an opening (50a, 50b, 50c, 50d, 50e) drilled in said central partition, so that said heat-transfer fluid can circulate from the inlet connector (40) to the outlet connector (30), through said at least one circulation channels (46a, 46b, 46c, 46d, 46e) of the rear cup (4), then through said at least one circulation channel (36a, 36b, 36c, 36d, 36e) of the front cup (3), while flowing on both sides of said central partition (5).

2. The deflector according to claim 1, **characterized in that** the circulation channel or channels (36a, 36b, 36c, 36d, 36e) of the front cup (3) and the circulation channel or channels (46a, 46b, 46c, 46d, 46e) of the rear cup (4) are symmetrical with respect to a symmetry plane passing through said central partition (5) so that the heat-transfer fluid circulates in the circulation channel or channels of the front cup (3) counter-flow to the direction wherein it circulates in a channel or the channels of the rear cup (4), situated facing it.

3. The deflector according to claim 1 or 2, **characterized in that** the bottom (31) of the front cup (3) and the bottom (41) of the rear cup (4) are configured in relief so as to form a peripheral annular groove, called respectively a "collection groove" (35) and "distribution groove" (45), which extends around said circulation grooves (34, 44), the two cups (3, 4) being assembled on either side of the central partition (5) so that the collection (35) and distribution (45) grooves form with said central partition respectively a collection channel (37) and a distribution channel (47), the inlet connector (40) leading into said distribution channel (45) and the outlet connector (30) leading into said collection channel (35), said distribution (45) and collection (35) channels also each being provided with a deflecting partition (48, 38) which allows the heat-transfer fluid to be guided from the distribution channel (45) to the circulation channels (46a, 46b, 46c, 46d, 46e) of the rear cup (4) and respectively from the circulation channels (36a, 36b, 36c, 36d, 36e) of the front cup (3) to the collection channel (35).

4. The deflector according to any one of the preceding claims, **characterized in that** the circulation channel or channels (36a, 36b, 36c, 36d, 36e, 46a, 46b, 46c, 46d, 46e) are in the form of a spiral.

5. The deflector according to any one of claims 1 to 3, **characterized in that** the circulation channel or channels (36a, 36b, 36c, 36d, 36e, 46a, 46b, 46c, 46d, 46e) are in the form of a coil.

6. The deflector according to any one of claims 1 to 3, **characterized in that** the circulation channel or channels (36a, 36b, 36c, 36d, 36e, 46a, 46b, 46c, 46d, 46e) have a rectilinear shape.

7. The deflector according to claim 3, **characterized in that** the front (3) and rear (4) cups comprise at least two circulation channels (36a, 36b, 36c, 36d, 36e, 46a, 46b, 46c, 46d, 46e) disposed wound side by side in a spiral and inside which the heat-transfer fluid circulates in parallel, **in that** the first ends (361a, 361b, 361c, 361d, 361e) of said circulation channels (36a, 36b, 36c, 36d, 36e) of the front cup (3) lead into the collection channel (37) and **in that** the first ends (461a, 461b, 461c, 461d, 461e) of said circulation channels (46a, 46b, 46c, 46d, 46e) of the rear cup (4) lead into the distribution channel (47).

8. A condensation heat exchanger (1', 1") comprising at least one bundle (12a, 12b) consisting of a tube or a group of tubes disposed end to end, wound into a helix, this tube being made of a material with good thermal conductivity, this or these bundle(s) being mounted fixedly inside a gas-tight shell (10), this shell being provided with a gas discharge sleeve (13), means being provided to circulate at least one heat-transfer fluid, such as water, to be heated, inside said tube bundle(s) (12a, 12b), the exchanger also comprising a deflector disposed at the end of said bundle (12a) of at least one tube or interleaved between two of these adjoining bundles (12a, 12b), and means for conveying or means of producing hot gases (11), **characterized in that** said deflector (2) conforms to any one of claims 1 to 7 and **in that** the deflector (2) and said means of conveying or means of producing hot gases (11) are disposed so that said hot gases lick the exterior face (312) of the front cup (3) of the deflector then pass radially or approximately radially through the bundle (12a) of tubes or of groups of tubes situated upstream of said deflector (2) by passing through the gaps (121) separating its turns, from the interior to the exterior and finally lick the exterior face (412) of the rear cup (4) of said deflector, before being discharged through said gas discharge sleeve (13).

9. The exchanger (1', 1") according to claim 8, **characterized in that** the outlet connector (30) of said deflector (2) is in fluid communication with at least one of the tube bundles (12a), so that it is the same heat-transfer fluid that circulates in the deflector (2) and in the tube bundle(s) (12a).

10. The exchanger (1', 1") according to claim 8 or 9, **characterized in that** the outer diameter of the deflector (2) is identical or substantially identical to the outer diameter of the tube bundle(s) (12a, 12b) and **in that** the length (L1) between the two ends of the inlet connector (40) and of the outlet connector (30) of the deflector (2) is identical or substantially identical to the length (L2) between the two ends of the orifices (120) of the tube of each tube bundle (12a, 12b).

11. The exchanger (1', 1") according to one of claims 8 to 10, **characterized in that** the deflector (2) is interleaved between two bundles (12a, 12b) of tubes or of groups of tubes, the bundle (12a) situated upstream of the deflector (2) serving as a primary exchanger and the bundle (12b) situated downstream of the deflector with respect to the flow direction of hot gases serving as a secondary exchanger, so that the hot gases lick the exterior face (312) of the front cup (3) of the deflector, then pass radially or approximately radially through the bundle (12a) of tubes or of groups of tubes of the primary exchanger by passing through the gaps (121) separating its turns, from the interior to the exterior, then subsequently passe radially or approximately radially through the bundle (12b) of tubes or of groups of tubes of the secondary exchanger by passing through the gaps (121) separating its turns, from the exterior to the interior, and finally lick the exterior face (412) of the rear cup (4) of said deflector before being discharge through said gas discharge sleeve (13).

12. The exchanger (1', 1") according to one of claims 8 to 11, **characterized in that** the wall of the tube(s) of a tube bundle (12a, 12b) has a flattened oval straight section of which the major axis is perpendicular, or approximately perpendicular, to that (X-X') of the helix, while the width of the gap separating two adjoining turns is constant and smaller than the thickness of said straight section.
